# EUROPEAN PATENT APPLICATION

(11) **EP 3 778 043 A1**
(43) Date of publication of application: **17.02.2021**
(21) Application number: 19912198.9
(22) Date of filing: 11.07.2019
(51) Int. Cl.: B08B 3/02

(54) **SPRAY-TYPE SWIRLING STEAM HEAD DEVICE**

(30) Priority: 21.06.2019 KR 20190074049
(71) Applicant: Hwang, Byong-Ryeol, Yangyang-gun Gangwon-do 25000 (KR)
(72) Inventor: Hwang, Byong-Ryeol, Yangyang-gun Gangwon-do 25000 (KR)
(74) Representative: Lermer, Christoph
(86) International application number: PCT/KR2019/008579
(87) International publication number: WO 2020/256208

(57) **Abstract**

The present invention relates to a vortex spray type steam head device, which includes: a nozzle member having a cylindrical shape, and receiving and spraying steam to the outside; a rotary body rotatably coupled to an upper portion of the nozzle member, having a receiving groove having a predetermined depth on an upper portion thereof, and having a through-hole longitudinally formed through a center portion; a ring-shaped support body inserted in the receiving groove and supporting the rotary body; a fixing bolt fixing the rotary body to the nozzle member with the support body inserted in the receiving groove; and a cover member having an open top, having a receiving space therein, and receiving the nozzle member, the rotary body, the support body, and the fixing bolt therein.

## Description

### Technical Field

The present invention relates to a vortex spray type steam head device and, more particularly, to a vortex spray type steam head device that can be rotated without rounding the outer surface of a rotary body.

### Background Art

As well known, it is possible to extract coffee using a coffee machine at specialized places that extract and sell brewed coffee. When coffee is extracted through a coffee machine, many coffee grounds are filtered through the coffee machine, so it is required to periodically wash and sanitize the coffee machine. This is for both keeping the coffee machine clean in terms of sanitation and providing the original taste of coffee by making it possible to extract tastier coffee without impurities such as coffee grounds when extracting the coffee.

Washing for removing coffee grounds, etc. is an important process that determines the taste of coffee, as described above, and it is required to wash and sanitize everyday a group head that is the core part of a coffee machine and determines the taste of coffee because liquid coffee finally passes through the group head. Accordingly, if users neglect this process, a severe problem may occur with the taste of coffee. Therefore, this is the most important process.

Accordingly, since it is important to wash the group head, a wash brush for the group head is separately prepared and used to wash the group head. Such a wash brush for a group head is composed of a brush part having hairs made of synthetic resin and a handle bent from the brush part. Further, a high-pressure steam spray head is disposed at an end of the washing device to remove coffee ground by spraying steam straight.

However, according to this type using steam and a brush, the brush is melted by the high-pressure and high-temperature steam, so the brush has to be frequently replaced. Further, a rotary body should be rounded so that the steam head device that uses only steam is efficiently operated. Accordingly, there is a problem in that much cost is needed for rounding and the performance is greatly influenced by the rounding angle.

### Disclosure

### Technical Problem

The present invention relates to a vortex spray type steam head device in which a rotary body can be rotated without rounding the outer surface of a rotary body.

Further, the present invention relates to a vortex spray type steam head device that can reduce thermal expansion of a rotary body and a support body due to high-temperature steam by decreasing the number of bearings connected to the rotary body.

The objects of the present invention are not limited to those described above and other objects not stated herein would be apparently understood by those who have ordinary skills in the art that the present invention belongs to from the following description.

### Technical Solution

According to a first embodiment of the present invention relates, a vortex spray type steam head device may include: a nozzle member having a cylindrical shape, and receiving and spraying steam to the outside; a rotary body rotatably coupled to an upper portion of the nozzle member, having a receiving groove having a predetermined depth on an upper portion thereof, and having a through-hole longitudinally formed through a center portion; a ring-shaped support body inserted in the receiving groove and supporting the rotary body; a fixing bolt fixing the rotary body to the nozzle member with the support body inserted in the receiving groove; and a cover member having an open top, having a receiving space therein, and receiving the nozzle member, the rotary body, the support body, and the fixing bolt therein.

According to a second embodiment of the present invention relates, a vortex spray type steam head device may include: a nozzle member having a cylindrical shape, and receiving and spraying steam to the outside; a rotary body rotatably coupled to an upper portion of the nozzle member, having a receiving groove having a predetermined depth on an upper portion thereof, and having a through-hole longitudinally formed through a center portion; a ring-shaped support body inserted in the receiving groove and supporting the rotary body; a fixing bolt fixing the rotary body to the nozzle member with the support body inserted in the receiving groove; and a cover member having an open top, having a receiving space therein, and receiving the nozzle member, the rotary body, the support body, and the fixing bolt therein, in which the nozzle member may further include a steam supply body having a cylindrical shape, having a steam supply path longitudinally formed therein, and having a plurality of steam spray holes inclined upward to an outer surface from the steam supply path.

### Advantageous Effects

According to the present invention, since the rotary body can be rotated without rounding the outer surface of a rotary body, it is possible to save the cost for rounding the outer surface. Further, even variations of performance according to the angle of rounding are not generated. Therefore, there is an advantage in that it is possible to maintain economical efficiency and constant quality.

Further, the number of support bodies that are connected to the rotary body is reduced, so thermal expansion of the rotary body and the support body due to high-temperature steam can be reduced. Accordingly, rotation can be efficiently performed. Further, the manufacturing costs are reduced by reducing components.

### Description of Drawings

FIG. 1 is an exploded perspective view of a vortex spray type steam head device according to a first embodiment of the present invention.
FIG. 2 is a cross-sectional exploded perspective view of the vortex spray type steam head device according to the first embodiment of the present invention.
FIG. 3 is a view showing a nozzle member of the vortex spray type steam head device according to the first embodiment of the present invention.
FIG. 4 is a view showing a rotary body of the vortex spray type steam head device according to the first embodiment of the present invention.
FIG. 5 is a view showing a cover member of the vortex spray type steam head device according to the first embodiment of the present invention.
FIG. 6 is a cross-sectional view of the vortex spray type steam head device according to the first embodiment of the present invention.
FIG. 7 is an exploded perspective view of a vortex spray type steam head device according to a second embodiment of the present invention.
FIG. 8 is a cross-sectional view showing an assembly of a nozzle member and a cover member of the vortex spray type steam head device according to the second embodiment of the present invention.
FIG. 9 is a view showing a cover member of the vortex spray type steam head device according to the second embodiment of the present invention.
FIG. 10 is a view showing the nozzle assembly of the vortex spray type steam head device according to the second embodiment of the present invention.

### Mode for Invention

The advantages and features of embodiments of the present invention, and methods of achieving them will be clear by referring to the exemplary embodiments that will be describe hereafter in detail with reference to the accompanying drawings. However, the present invention is not limited to the exemplary embodiments described hereafter and may be implemented in various ways, and the exemplary embodiments are provided to complete the description of the present invention and let those skilled in the art completely know the scope of the present invention and the present invention is defined by claims. Like reference numerals indicate like components throughout the specification.

In the following description of embodiments of the present invention, detailed descriptions of well-known functions or configurations relating to the present invention will not be provided so as not to obscure the description of the present invention with unnecessary details. Further, the following terminologies are defined in consideration of the functions in the embodiments of the present disclosure and may be construed in different ways by the intention or practice of users and operators. Therefore, the definitions thereof should be construed based on the contents throughout the specification.

Hereinafter, embodiments of the present disclosure are described in detail with reference to the accompanying drawings.

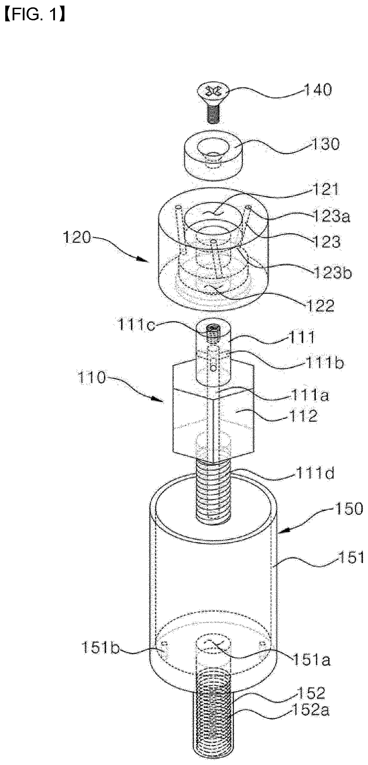

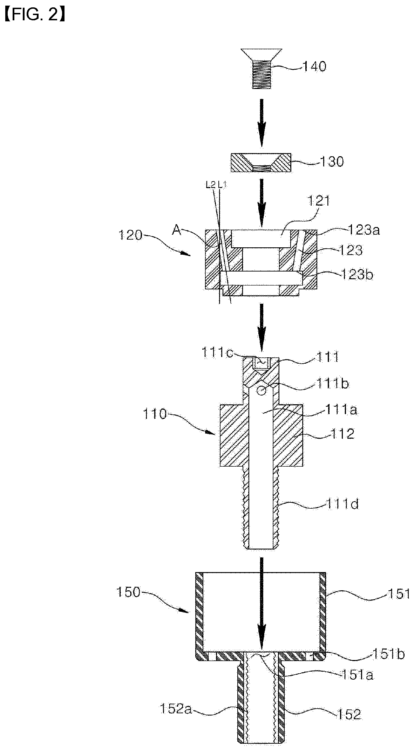

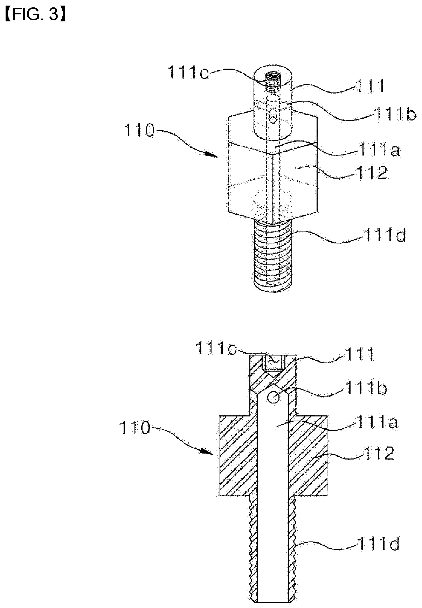

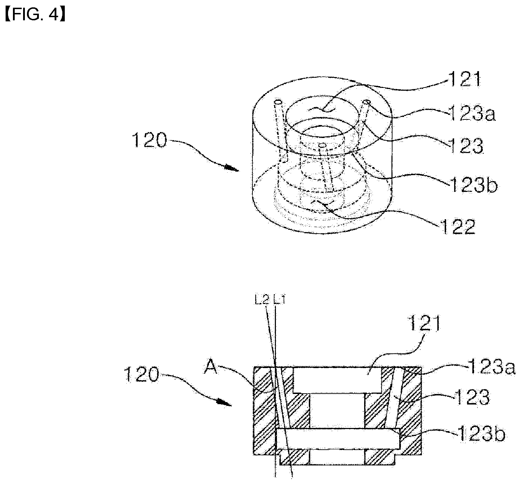

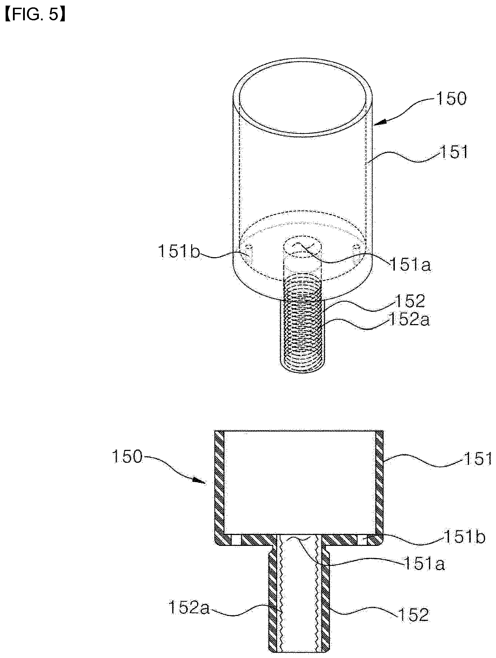

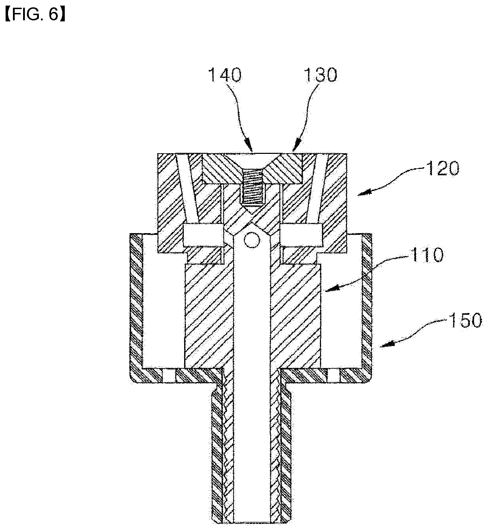

FIG. 1 is an exploded perspective view of a vortex spray type steam head device according to a first embodiment of the present invention, FIG. 2 is a cross-sectional exploded perspective view of the vortex spray type steam head device according to the first embodiment of the present invention, FIG. 3 is a view showing a nozzle assembly of the vortex spray type steam head device according to the first embodiment of the present invention, FIG. 4 is a view showing a rotary body of the vortex spray type steam head device according to the first embodiment of the present invention, FIG. 5 is a view showing a cover member of the vortex spray type steam head device according to the first embodiment of the present invention, and FIG. 6 is a cross-sectional view of the vortex spray type steam head device according to the first embodiment of the present invention.

Referring to FIGS. 1, 2, and 6, the vortex spray type steam head device may include a nozzle member 110, a rotary body 120, a support body 130, a fixing bolt 140, a cover member 150, etc.

Referring to FIG. 3, the nozzle member 110, which has a cylindrical shape, can receive and spray steam to the outside and may include a steam supply body 111, a protrusive body 112, etc.

The steam supply body 111 may have a cylindrical shape, a steam supply path 111a longitudinally formed therein, and a plurality of steam spray holes 111b inclined upward to the outer surface from the steam supply path 111a. The steam spray holes 111b may be three pieces to efficiently generate a vortex.

Accordingly, high-pressure steam that is supplied from the steam supply body passes through the steam supply path 111a of the steam supply body 111 and is then primarily sprayed through the steam spray holes 111b. Further, the rotary body 120 is rotated about the steam supply body 111 of the nozzle member 110 by the spray pressure of the steam.

The steam supply body 111 has a fixing groove 111c formed on the top and the fixing bolt 140 can be inserted and fixed in the fixing groove 111c.

The steam supply body 111 has a male thread 111d on the outer surface of the lower portion thereof, to it can be thread-fastened to the cover member 150.

The protrusive body 112 protrudes outward around the outer surface of the middle portion of the steam supply body 111 and may have a pillar shape with a polygonal or circular cross-section.

The protrusive body 112 may be a reference that divides the steam supply body 111 up and down.

The rotary body 120, which has a cylindrical shape, may be rotatably coupled to the upper portion of the nozzle member 110, may have receiving groove 121 having a predetermined depth (e.g., 1∼5mm) on the top, and may have a through-hole 122 longitudinally formed through the center portion.

The rotary body 120 has a plurality of rotational spray holes 123 inclined upward to the top from the inner surface to respectively correspond to the positions of the steam spray holes 111b.

The inclination of the rotational spray hole 123 is the angle A between a line L1 vertically drawn through an outlet 123a of the rotational spray hole 123 and a line L2 connecting the outlet 123a to an inlet 123b of the rotational spray hole 123 and may be 10~12 degrees.

When the inclination of the rotational spray hole 123 is less than 10 degrees, a vortex is not formed and steam is sprayed almost straight, and when the inclination exceeds 12 degrees, steam is spread, so it is preferable that the inclination is 10~12 degrees.

The rotational spray holes 123 may have the same thickness or may have different thicknesses.

By making the thicknesses of the rotational spray holes 123 different, it is possible to change the spray direction of a vortex, depending on circumstances.

The rotational spray holes 123 may have the same inclination or may have different inclinations within 10∼12 degrees.

By making the inclinations of the rotational spray holes 123 different within 10~12 degrees, it is possible to change the shape of the spray direction of a vortex, depending on circumstances.

Consequently, the rotary body 120 is coupled to the upper portion of the steam supply body 111 of the nozzle member 110 and the bottom of the rotary body 120 is seated on the top of the protrusive body 112.

Further, as described above, high-pressure steam that is supplied from the steam supply body passes through the steam supply path 111a of the steam supply body 111 and is then primarily sprayed through the steam spray holes 111b. Further, the rotary body 120 is rotated about the steam supply body 111 of the nozzle member 110 by the spray pressure of the steam, and in this process, steam is secondarily sprayed through the rotary spray holes 123 of the rotary body 120. Accordingly, a vortex is formed.

The support body 130 is inserted in the receiving groove 121 of the rotary body 120 and can support the rotary body 120.

The inner side of the support body 130 may be inclined inward to correspond to the bolt head of the fixing bolt 140 to be described below such that the fixing bolt 140 can be inserted through the support body 130 with the bolt head caught.

The fixing bolt 140 can fix the rotary body 120 to the nozzle member 110 with the support body 130 inserted in the receiving groove 121.

The fixing bolt 140 has a driver groove formed on the top of the bolt head for inserting a driver and has a cylindrical bolt body having a diameter smaller the head, and the bolt body can be inserted and thread-fastened in the fixing groove 111c.

The cover member 150 has an open top and a receiving space therein having a predetermined depth (e.g. 12∼14mm). The nozzle member 110, the rotary body 120, the support body 130, and the fixing bolt 140 are received in the cover member 150. The cover member 150 may include a protective cover 151, a coupling cover 152, etc.

The protective cover 151 has a cylindrical shape with an open top and may have a cover hole 151a on the bottom through which the nozzle member 110 is inserted.

The coupling cover 152 protrudes with a predetermined length (e.g., 10~15mm) downward from the cover hole 151a and is integrated with the protective cover 151, and the lower portion of the nozzle member 110 can be inserted and fixed in the coupling cover 152.

The coupling cover 152 has a female thread 152a on the inner side to correspond to the male thread 111d of the steam supply body 111, so it can be thread-fastened to the steam supply body 111.

In more detail, when the steam supply body 111 of the nozzle member 110 is inserted in the cover member 150, only the lower portion of the steam supply body 111 is inserted and caught by the protrusive body 112 and the lower portion of the protrusive body 112 is in contact with the bottom of the protective cover 151.

Preferably, a gap is defined between the steam supply body 111 of the nozzle body 110 and the rotary body 120. When some of steam is sprayed to the rear end of the rotary body 120 through the gap, it can be sprayed forward again through the space defined between the outer surface of the rotary body 120 and the protective cover 151 of the cover member 150.

Accordingly, the steam that is sprayed directly to the front end of the rotary body 120 by rotation of the rotary body 120 and is sprayed to the rear end of the rotary body 120 through the gap is sprayed again forward by the protective cover 151, so the entire spray area is increased. Therefore, it is possible to reduce noise and increase a sanitizing area.

The protective cover 151 may have at least one drain hole 151b for discharging water on the bottom thereof.

The drain hole 151b prevents water drops of steam, which is sprayed through the rear end of the rotary body 120 and is partially changed into water due to a temperature difference in the protective cover 151, from collecting on the bottom of the protective cover 151. Accordingly, there is an advantage in that it is possible to prevent problems with the nozzle member 110, the rotary body 120, the support body 130, and the fixing bolt 140 due to contact of water drops.

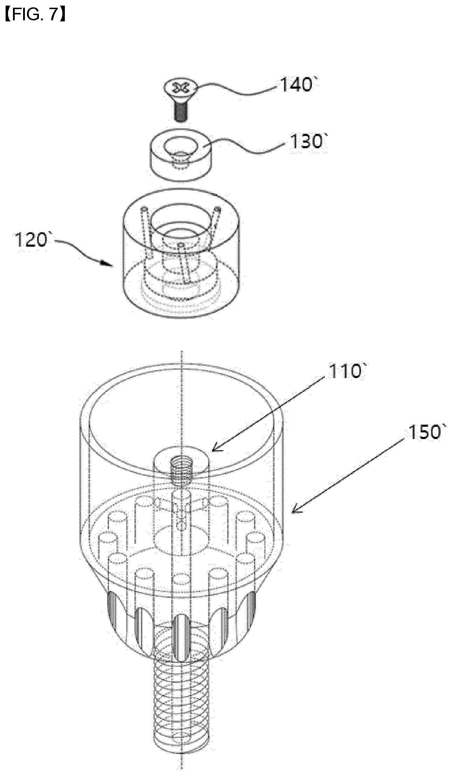

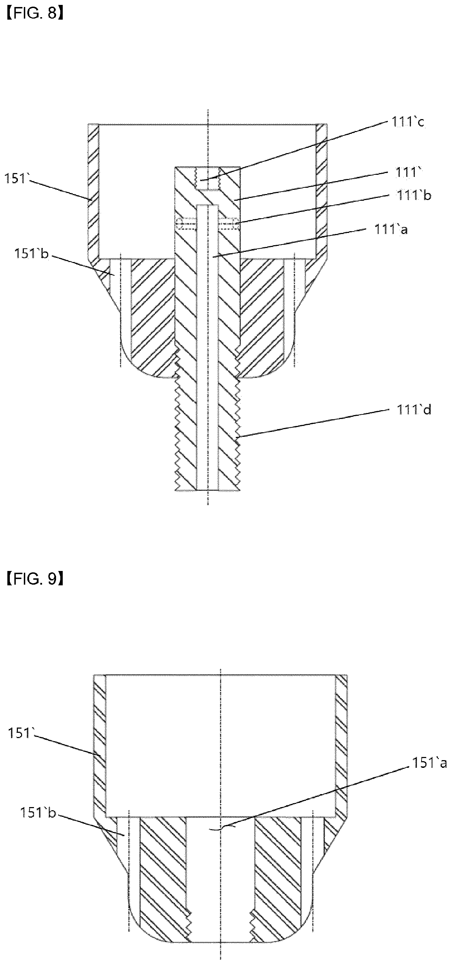

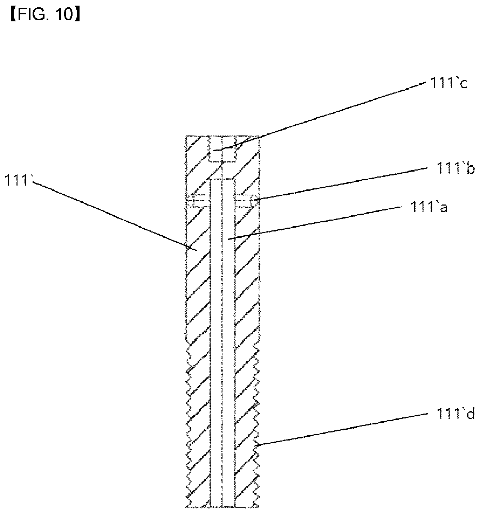

FIG. 7 is an exploded perspective view of a vortex spray type steam head device according to a second embodiment of the present invention, FIG. 8 is a cross-sectional view showing an assembly of a nozzle member and a cover member of the vortex spray type steam head device according to the second embodiment of the present invention, FIG. 9 is a view showing a cover member of the vortex spray type steam head device according to the second embodiment of the present invention; an, and FIG. 10 is a view showing the nozzle assembly of the vortex spray type steam head device according to the second embodiment of the present invention.

Referring to FIGS. 7 to 10, the vortex spray type steam head device according to the second embodiment may include a nozzle member 110', a rotary body 120', a support body 130', a fixing bolt 140', a cover member 150', etc.

The rotary body 120', the support body 130', and the fixing bolt 140' in this configuration are the same as the rotary body 120, the support body 130, and the fixing bolt 140 of the first embodiment, so they are not described in detail.

The nozzle member 110', which has a cylindrical shape, can receive and spray steam to the outside and may include a steam supply body 111', etc.

The steam supply body 111' may have a cylindrical shape, a steam supply path 111'a longitudinally formed therein, and a plurality of steam spray holes 111'b inclined upward to the outside from the steam supply path 111'a. The steam spray holes 111'b may be three pieces to efficiently generate a vortex.

Accordingly, high-pressure steam that is supplied from the steam supplier passes through the steam supply path 111'a of the steam supply body 111' and is then primarily sprayed through the steam spray holes 111'b. Further, the rotary body 120' is rotated about the steam supply body 111' of the nozzle member 110' by the spray pressure of the steam.

The steam supply body 111' has a fixing groove 111'c formed on the top and the fixing bolt 140' can be inserted and fixed in the fixing groove 111'c.

The steam supply body 111' has a male thread 111'd on the outer surface of the lower portion thereof, to it can be thread-fastened to the cover member 150'.

The cover member 150' has an open top and a receiving space therein. The nozzle member 110', the rotary body 120', the support body 130', and the fixing bolt 140' are received in the cover member 150'. The cover member 150' may include a protective cover 151', etc.

The protective cover 151' has a cylindrical shape having an open top and a receiving space therein having a predetermined depth (e.g., 12~14mm), and a cover hole 151'a having a predetermined depth (e.g., 10~12mm) may be formed on the bottom of the receiving space such that the lower portion of the nozzle member 110' is inserted therein.

The cover hole 151'a has a female thread on the inner side to correspond to the male thread 111'd of the steam supply body 111', so it can be thread-fastened to the steam supply body 111'.

The protective cover 151' may have at least one drain hole 151'b for discharging water on the bottom thereof.

The drain hole 151'b prevents water drops of steam, which is sprayed through the rear end of the rotary body 120 and is partially changed into water due to a temperature difference in the protective cover 151', from collecting on the bottom of the receiving space of the protective cover 151'. Accordingly, there is an advantage in that it is possible to prevent problems with the nozzle member 110', the rotary body 120', the support body 130', and the fixing bolt 140' due to contact of water drops.

Preferably, a gap is defined between the steam supply body 111' of the nozzle body 110' and the rotary body 120'. When some of steam is sprayed to the rear end of the rotary body 120' through the gap, it can be sprayed forward again through the space defined between the outer surface of the rotary body 120' and the protective cover 151' of the cover member 150'.

Accordingly, the steam that is sprayed directly to the front end of the rotary body 120' by rotation of the rotary body 120' and is sprayed to the rear end of the rotary body 120' through the gap is sprayed again forward by the protective cover 151', so the entire spray area is increased. Therefore, it is possible to reduce noise and increase a sanitizing area.

According to a third embodiment, a steam spray may include the spray type steam head devices according to the first embodiment and the second embodiment of the present invention and a grip connected to the spray type steam head devices and formed in a cylindrical shape so that a user can hold it by hand.

The grip is made of a silicon material, so it is insulated with deforming by high-temperature steam. Accordingly, there is an advantage in that a user can easily hold with a hand and use the steam spray.

As described above, since the rotary body can be rotated without rounding the outer surface of a rotary body, it is possible to save the cost for rounding the outer surface. Further, even variations of performance according to the angle of rounding are not generated. Therefore, the present invention has an advantage in that it is possible to maintain economical efficiency and constant quality.

Further, the number of support bodies that are connected to the rotary body is reduced, so thermal expansion of the rotary body and the support body due to high-temperature steam can be reduced. Accordingly, rotation can be efficiently performed. Further, the manufacturing costs are reduced by reducing components.

Although the present invention was described above with reference to various embodiments, the present invention is not limited thereto and it would be apparent to those skilled in the art that the present invention may be replaced, modified, and changed without departing from the spirit of the present invention.

## Claims

1. A vortex spray type steam head device comprising:
a nozzle member having a cylindrical shape, and receiving and spraying steam to the outside;
a rotary body rotatably coupled to an upper portion of the nozzle member, having a receiving groove having a predetermined depth on an upper portion thereof, and having a through-hole longitudinally formed through a center portion;
a ring-shaped support body inserted in the receiving groove and supporting the rotary body;
a fixing bolt fixing the rotary body to the nozzle member with the support body inserted in the receiving groove; and
a cover member having an open top, having a receiving space therein, and receiving the nozzle member, the rotary body, the support body, and the fixing bolt therein.

2. The vortex spray type steam head device of claim 1, wherein the nozzle member includes:
a steam supply body having a cylindrical shape, having a steam supply path longitudinally formed therein, and having a plurality of steam spray holes inclined upward to an outer surface from the steam supply path; and
a protrusive body protruding outward around an outer surface of a middle portion of the steam supply body.

3. The vortex spray type steam head device of claim 2, wherein the rotary body has rotational spray holes inclined upward to a top from an inner surface to respectively correspond to positions of the steam spray holes.

4. The vortex spray type steam head device of claim 1, wherein the cover member includes:
a protective cover having a cylindrical shape with an open top and having a cover hole at a center of a bottom through which a lower portion of the nozzle member is inserted; and
a coupling cover protruding with a predetermined length downward from the cover hole, integrated with the protective cover, and having a lower portion of the nozzle member inserted and fixed in an internal space thereof.

5. A vortex spray type steam head device comprising:
a nozzle member having a cylindrical shape, and receiving and spraying steam to the outside;
a rotary body rotatably coupled to an upper portion of the nozzle member, having a receiving groove having a predetermined depth on an upper portion thereof, and having a through-hole longitudinally formed through a center portion;
a ring-shaped support body inserted in the receiving groove and supporting the rotary body;
a fixing bolt fixing the rotary body to the nozzle member with the support body inserted in the receiving groove; and
a cover member having an open top, having a receiving space therein, and receiving the nozzle member, the rotary body, the support body, and the fixing bolt therein,
wherein the nozzle member further includes a steam supply body having a cylindrical shape, having a steam supply path longitudinally formed therein, and having a plurality of steam spray holes inclined upward to an outer surface from the steam supply path.

6. The vortex spray type steam head device of claim 5, wherein the cover member includes a protective cover having a cylindrical shape, which has an open top and a receiving space having a predetermine depth, and having a cover hole having a predetermine depth and formed on a bottom of the receiving space through which a lower portion of the nozzle member is inserted.

7. The vortex spray type steam head device of claim 5, wherein the rotary body has rotational spray holes inclined upward to a top from an inner surface to respectively correspond to positions of the steam spray holes.
